# NEUE EUROPÄISCHE PATENTSCHRIFT

(11) **EP 2 679 865 B2**
(45) Veröffentlichungstag und Bekanntmachung des Hinweises auf die Entscheidung über den Einspruch: **01.08.2018**
(45) Hinweis auf die Patenterteilung: 11.03.2015
(21) Anmeldenummer: 13172267.0
(22) Anmeldetag: 17.06.2013
(51) Int. Cl.: F16H 25/20, F16H 25/24, E05F 15/611, F16H 57/029, F16H 57/031, F16H 57/033, H02K 7/06

(54) **Baureihe von Antriebseinrichtungen**
Drive device and construction kit for such a drive device
Dispositif d'entraînement et système modulaire pour un tel dispositif d'entraînement

(30) Priorität: 27.06.2012 DE 102012211062
(43) Veröffentlichungstag der Anmeldung: 01.01.2014
(73) Patentinhaber: Stabilus GmbH, 56070 Koblenz (DE)
(72) Erfinder: Anheier, Lars, 56330 Kobern-Gondorf (DE); Probst, Ulrich, 56204 Hillscheid (DE); Müller, Thomas, 56244 Leuterod (DE); Bröder, Meik, 56070 Koblenz (DE)
(74) Vertreter: Weickmann & Weickmann PartmbB

(56) Entgegenhaltungen:
- EP-A1- 1 186 800
- EP-A2- 2 196 702
- WO-A2-2009/152899
- DE-A1- 3 743 159
- DE-A1- 19 501 432
- DE-A1-102006 053 730
- DE-A1-102007 048 928
- DE-U1-202007 002 306
- US-A- 2 988 609
- US-A- 2 988 609
- US-A1- 2009 200 830

## Beschreibung

Die Erfindung betrifft eine Baureihe von Antriebseinrichtungen, insbesondere für eine Klappe eines Fahrzeugs, wobei jede Antriebseinrichtung der Baureihe umfasst einen Drehantrieb und einen Spindeltrieb mit einer Gewindespindel und einer auf der Gewindespindel angeordneten Gewindemutter, wobei der Drehantrieb mit der Gewindespindel oder der Gewindemutter über eine Kupplungseinheit mit einem ersten Drehantrieb-seitigen Kupplungselement und einem zweiten Spindeltrieb-seitigen Kupplungselement verbunden ist, und wobei die Gewindespindel und die Gewindemutter in Antwort auf eine Drehung des Drehantriebs relativ zueinander axial verlagerbar sind.

Derartige Antriebseinrichtungen sind aus dem Stand der Technik allgemein bekannt. Lediglich beispielhaft sei auf die DE 10 2008 008 743 A1 verwiesen. Die Konstruktion der Antriebseinrichtung wird üblicherweise in Anpassung an den jeweiligen Anwendungsfall gewählt. Dies führt zu einer großen Vielfalt unterschiedlicher Antriebseinrichtungen, die auf Lager gehalten werden müssen, um allen Anforderungen der Kunden gerecht zu werden. Man kann sich diese Problematik in einfacher Weise wie folgt verdeutlichen: Wenn man Drehantrieb-seitig Drehantriebe mit nur drei unterschiedlichen Leistungsstufen bereitstellen möchte, nämlich niedrige Leistung, mittlere Leistung und hohe Leistung, und Spindeltrieb-seitig nur drei verschiedene Hublängen bereitstellen möchte, nämlich kurze Hublänge, mittlere Hublänge und lange Hublänge, so muss man insgesamt neun verschiedene Typen von Antriebseinrichtungen vorrätig halten, um alle Kundenwünschen zeitnah bedienen zu können. Dies ist aufwändig und damit nachteilig. Ähnliche Antriebseinrichtungen sind ferner aus der gattungsgemäßen DE 10 2007 048 928 A1 und der EP 1 186 800 A1 bekannt, auf die ebenfalls verwiesen sei.

Desweiteren sind aus der DE 195 01 432 A1 und der US 2,988,609 modulare Antriebs- bzw. Aktuatorsysteme bekannt.

Es ist daher Aufgabe der vorliegenden Erfindung, die Antriebseinrichtung der eingangs genannten Art derart weiterzubilden, dass dem Kundenwunsch nach hoher Vielfalt an verschiedenen Typen von Antriebseinrichtungen bei reduziertem Aufwand bei der Lagerhaltung entsprochen werden kann.

Diese Aufgabe wird gemäß einem ersten Aspekt der vorliegenden Erfindung durch eine Baureihe von Antriebseinrichtungen der eingangs genannten Art gelöst, welche aus einer Drehantrieb-Baugruppe und einer Spindeltrieb-Baugruppe zusammengesetzt sind, wobei die Drehantrieb-Baugruppe den Drehantrieb und das erste Kupplungselement umfasst und die Spindeltrieb-Baugruppe den Spindeltrieb und das zweite Kupplungselement umfasst, und die Drehantrieb-Baugruppe und die Spindeltrieb-Baugruppe einem Baukasten entnommen sind, der wenigstens zwei Drehantrieb-Baugruppen und wenigstens zwei Spindelantrieb-Baugruppen umfasst, wobei die wenigstens zwei Drehantrieb-Baugruppen des Baukastens identisch ausgebildete erste Kupplungselemente aufweisen, sich hinsichtlich der Auslegung des Drehantriebs jedoch in zumindest einem Auslegungsparameter, beispielsweise der Drehantriebsleistung, voneinander unterscheiden, wobei die wenigstens zwei Spindeltrieb-Baugruppen des Baukastens identisch ausgebildete zweite Kupplungselemente aufweisen, sich hinsichtlich der Auslegung des Spindeltriebs jedoch in zumindest einem Auslegungsparameter, beispielsweise der Hublänge, voneinander unterscheiden, und wobei die ersten Kupplungselemente der wenigstens zwei Drehantrieb-Baugruppen und die zweiten Kupplungselemente der wenigstens zwei Spindeltrieb-Baugruppen zueinander passend ausgebildet sind. Erfindungsgemäß brauchen somit nicht mehr neun verschiedene Typen von Antriebseinrichtungen auf Lager gehalten zu werden, sondern lediglich sechs Baugruppen, nämlich drei Drehantrieb-Baugruppen und drei Spindeltrieb-Baugruppen, aus denen die neun Typen von Antriebseinrichtungen in einfacher Weise zusammengesetzt werden können. Man sieht leicht ein, dass der erfindungsgemäße Effekt der vereinfachten Lagerhaltung noch deutlicher zu Tage tritt, wenn die Vielfalt der Auslegungsparameter der Antriebseinrichtung sowohl Drehantrieb-seitig als auch Spindeltrieb-seitig die Zahl 3 noch übersteigt.

Ein weiteres Problem, das bei den gattungsgemäßen Antriebseinrichtungen immer wieder auftritt, ist deren Korrosionsbeständigkeit, insbesondere deren Dichtheit gegenüber dem Eindringen von Feuchtigkeit, etwa beim Einsatz der Antriebseinrichtungen als Stellantrieb zum Öffnen und Schließen von Türen und Klappen, beispielsweise Heckklappen oder Kofferraumdeckeln, von Kraftfahrzeugen.

Zur Behebung dieses Problems ist der Drehantrieb in einem Gehäuserohr aufgenommen sein, das an seinem von dem Spindeltrieb abgewandten Ende von einem Bodenstück verschlossen ist, das Bodenstück und das Gehäuserohr aus Kunststoff gefertigt sein, und das Bodenstück mit dem Gehäuserohr stoffschlüssig verbunden sein. Durch die stoffschlüssige Verbindung kann das Eindringen von Feuchtigkeit in einfacher Weise verhindert oder zumindest beträchtlich erschwert werden. Die Fertigung aus Kunststoff hat ferner den Vorteil einer geringeren Geräuschentwicklung bzw. der Dämpfung von Geräuschen, deren Entstehung nicht verhindert werden konnte.

Hierbei sind das Gehäuserohr und das Bodenstück voneinander getrennt ausgebildet und nachträglich miteinander stoffschlüssig verbunden sind.

In vorteilhafter Weiterbildung der vorliegenden Erfindung, aber auch unabhängig von der stoffschlüssigen Verbindung von Bodenstück und Gehäuserohr, kann als Material für das Gehäuserohr oder/und das Bodenstück ein Polyamid verwendet werden, beispielsweise PA6.6, vorzugsweise faserverstärktes PA6.6. Grundsätzlich ist es jedoch auch denkbar, ein anderes Polyamid einzusetzen. Ferner braucht Polyamid nicht in der Reinform verwendet zu werden.

Vielmehr ist auch der Einsatz eines ein Polyamid umfassenden Compounds oder eines Polyamid-Copolymers denkbar.

Zum nachträglichen stoffschlüssigen Verbinden kann beispielsweise eines der folgenden Verfahren verwendet werden: Ultraschallumformen, Laserschweißen, Heißgasschweißen, Kleben. Alle diese Verfahren können bei den vorstehend genannten Kunststoffmaterialien ohne Weiteres eingesetzt werden.

Wie dies von gattungsgemäßen Antriebseinrichtungen an sich bekannt ist, kann auch der Spindeltrieb der erfindungsgemäßen Antriebseinrichtung von einem Hüllrohr umgeben sein.

Dabei kann das Hüllrohr mit dem Gehäuserohr einstückig verbunden sein. Im Zusammenhang mit dem ersten Aspekt der vorliegenden Erfindung ist darauf hinzuweisen, dass in diesem Fall das Hüllrohr von Anfang an der Drehantrieb-Baugruppe zugeordnet ist. Die Anpassung an unterschiedlich lang ausgebildete Spindeltrieb-Baugruppen kann dabei beispielsweise dadurch erfolgen, dass das Hüllrohr eine Länge aufweist, die im Hinblick auf die längste Spindeltrieb-Baugruppe festgesetzt ist, und man es bei Kombination mit einer kürzeren Spindeltrieb-Baugruppe entsprechend ablängt.

Alternativ ist es jedoch auch denkbar, dass das Hüllrohr und das Gehäuserohr voneinander getrennt ausgebildet und nachträglich miteinander stoffschlüssig verbunden sind. In diesem Fall kann das Hüllrohr der Spindeltrieb-Baugruppe zugeordnet sein und mit dem Gehäuserohr erst bei der Endmontage stoffschlüssig verbunden werden. Die stoffschlüssige Verbindung kann beispielsweise durch Schweißen, insbesondere durch Laserschweißen, hergestellt werden. Aber auch der Einsatz der anderen vorstehend genannten Verbindungstechniken ist denkbar. Das Hüllrohr kann auch in diesem Fall aus einem Polyamid hergestellt sein, beispielsweise PA6.6, vorzugsweise faserverstärktes PA6.6. Grundsätzlich ist es jedoch auch denkbar, ein and res Polyamid einzusetzen. Ferner braucht Polyamid nicht in der Reinform verwendet zu werden. Vielmehr ist auch der Einsatz eines ein Polyamid umfassenden Compounds oder eines Polyamid-Copolymers denkbar.

Ferner ist erfindungsgemäß ein nach radial innen abstehender Vorsprung vorgesehen ist, wobei der Drehantrieb in dem Gehäuserohr zwischen dem Bodenstück und dem Vorsprung gehalten ist. Dieser Vorsprung bildet im zusammengebauten Zustand der Antriebseinrichtung mit seiner einen axialen Endfläche eine axiale Abstützstelle für den Drehantrieb und/oder mit seiner anderen axialen Endfläche eine axiale Abstützstelle für den Spindeltrieb. Grundsätzlich können auch mehrere nach radial innen abstehende Vorsprünge vorgesehen sein, von denen einer eine axiale Abstützstelle für den Drehantrieb bildet, während ein anderer eine axiale Abstützstelle für den Spindeltrieb bildet.

Zudem kann der Vorsprung eine Art Schnittstelle bilden, an der das erste Kupplungselement und das zweite Kupplungselement miteinander zusammenwirken, beispielsweise indem das erste Kupplungselement dem Vorsprung auf dessen dem Drehantrieb zugewandter Seite benachbart angeordnet ist und das zweite Kupplungselement oder das es tragende Ende der Gewindespindel einen von dem Vorsprung belassenen Axialdurchgang durchsetzt, um mit dem ersten Kupplungselement in Kupplungseingriff zu treten. Grundsätzlich könnte es aber auch das erste Kupplungselement sein, das den von dem Vorsprung belassenen Axialdurchgang durchsetzt. Im Falle von wenigstens zwei nach radial innen abstehenden Vorsprüngen können die beiden Kupplungselemente auch zwischen diesen Vorsprüngen miteinander in Kupplungseingriff stehen.

Vorteilhafterweise kann der Kupplungseingriff des ersten Kupplungselements und des zweiten Kuplungselements in axialer Richtung durch eine Schnappverbindung und in Umfangsrichtung durch eine formschlüssige Verbindung der beiden Kupplungselemente gebildet sein. Auf diese Weise kann der Kupplungseingriff der beiden Kupplungselemente in einfacher Weise hergestellt werden, indem sie unter Herstellung der formschlüssigen Verbindung in Umfangsrichtung so weit in axialer Richtung aufeinander zu geschoben werden, bis sich die Schnappverbindung schließt. Dabei kann die Schnappverbindung beispielsweise einen Sprengring umfassen, der beim Einführen des zweiten Kupplungselements in das erste Kupplungselement zusammengedrückt wird, sich bei hergestelltem Kupplungseingriff wieder aufweitet und die beiden Kupplungselemente formschlüssig aneinander sichert. Der Formschluss in Umfangsrichtung kann beispielsweise in Form einer Vielzahnverbindung bereitgestellt werden.

Der Vorsprung ist mit dem Gehäuserohr einstückig ausgebildet. Somit ist es erforderlich, dass das Bodenstück von dem Gehäuserohr getrennt ausgebildet ist, damit der Drehantrieb von der dem Bodenstück zugeordneten Seite des Gehäuserohrs in dieses eingeführt werden kann, bevor das Bodenstück und das Gehäuserohr stoffschlüssig miteinander verbunden werden. Es kann das Hüllrohr mit dem Gehäuserohr sowohl einstückig ausgebildet sein als auch von diesem getrennt ausgebildet und stoffschlüssig verbunden sein.

Um ein mögliches, von etwaigen Fertigungstoleranzen herrührendes Spiel ausgleichen zu können wird in Weiterbildung beider Aspekte der Erfindung vorgeschlagen, dass zwischen dem Bodenstück und dem Vorsprung eine Tellerfeder vorgesehen ist, vorzugsweise auf der dem Vorsprung benachbarten Seite des Drehantriebs.

Nachzutragen ist noch, dass dem Spindeltrieb eine Drehmomentabstützung zugeordnet ist, welche sich bei Drehung der Gewindespindel dem Versuch widersetzt, die Gewindemutter bei dieser Drehbewegung einfach in Umfangsrichtung mitzunehmen, und somit sicherstellt, dass die Drehbewegung der Gewindespindel in eine axiale Bewegung der Gewindemutter umgewandelt wird.

Nachzutragen ist ferner, dass der Drehantrieb, wie an sich bekannt, einen Elektromotor und ein Untersetzungsgetriebe umfassen kann, wobei das Untersetzungsgetriebe ausgangsseitig mit dem ersten Kupplungselement verbunden ist.

Nachzutragen ist noch, dass das freie Ende der Gewindespindel als das zweite Kupplungselement oder mit anderen Worten mit diesem einstückig ausgebildet sein kann.

In den beigefügten Figuren sind drei Antriebseinrichtungen dargestellt:
Figur 1 zeigt einen Längsschnitt des ersten Ausführungsbeispiels,
Figur 2 zeigt einen Längsschnitt einer nicht erfindungsgemäßen Antriebseinrichtung, und
Figur 3 zeigt einen Längsschnitt einer nicht erfindungsgemäßen Antriebseinrichtung.

Alle drei Antriebseinrichtungen haben im Wesentlichen den gleichen Grundaufbau, der daher zunächst für alle Antriebseinrichtungen gemeinsam beschrieben werden soll, bevor auf die Unterschiede der drei Antriebseinrichtungen eingegangen werden wird. Daher werden auch in allen drei Figuren für die gleichen Bauteile die gleichen Bezugszeichen verwendet.

Alle drei Antriebseinrichtungen 10 umfassen eine Drehantrieb-Baugruppe 12 mit einem Drehantrieb 14 und eine Spindelantrieb-Baugruppe 16 mit einem Spindeltrieb 18.

Der Drehantrieb 14 ist in einem Gehäuserohr 20 aufgenommen und umfasst einen Elektromotor 22, dem ein Untersetzungsgetriebe 24 nachgeschaltet ist. Abtriebsseitig ist das Untersetzungsgetriebe 24 mit einem ersten Kupplungselement 26 verbunden. Die (nicht dargestellten) elektrischen Anschlussleitungen zu dem Elektromotor 22 können durch eine Öffnung 28 in das Gehäuserohr 20 hineingeführt werden. Ferner ist an dem freien Ende des Gehäuserohrs 20 ein Bodenstück 30 vorgesehen, das mit einer Kugelpfanne 32 eines Kugelgelenks versehen ist.

Der Spindelantrieb 18 ist in einem Hüllrohr 33 aufgenommen und umfasst eine Gewindespindel 34, mit deren dem Untersetzungsgetriebe 24 zugewandten Ende ein zweites Kupplungselement 36 verbunden ist, welches im montierten Zustand der Antriebseinrichtung 10 mit dem ersten Kupplungselement 26 in Kupplungseingriff steht. Ein Außengewinde der Gewindespindel 34 steht mit einer Gewindemutter 38 in Gewindeeingriff, so dass eine von dem Elektromotor 22 über das Untersetzungsgetriebe 24 und die beiden Kupplungselemente 26, 36 übertragene Drehbewegung in eine Axialbewegung der Gewindemutter 38 umgewandelt werden kann.

Die Gewindemutter 38 ist mit einem Führungsrohr 40 verbunden, an dessen freiem Ende eine weitere Kugelpfanne 42 eines Kugelgelenks vorgesehen ist. An dem vom zweiten Kupplungselement 36 abgewandten Ende der Gewindespindel 34 ist eine Führungsscheibe 44 angeordnet, die mit der Innenfläche des Führungsrohrs 40 in Eingriff steht. Das Führungsrohr 40 ist von einer Schraubendruckfeder 46 umgeben, deren Funktion zum einen in dem Ausschluss einer etwaigen mechanischen Hysterese in dem Eingriff zwischen Gewindespindel 34 und Gewindemutter 38 besteht und zum anderen in der Unterstützung des Elektromotors 22 im Zuge einer Verlängerung der Antriebseinrichtung 10. Zum Schutz der Schraubendruckfeder 46 vor äußeren Einflüssen ist diese von einem Schutzrohr 48 umgeben, das ebenfalls mit dem freien Ende des Führungsrohrs 40 verbunden ist.

Nachzutragen ist noch, dass in allen drei Antriebseinrichtungen ein nach radial innen abstehender Vorsprung 50 vorgesehen ist, wobei der Drehantrieb 14 in dem Gehäuserohr 20 zwischen dem Bodenstück 30 und dem Vorsprung 50 gehalten ist.

In allen drei Antriebseinrichtungen sind das Bodenstück 30, das Gehäuserohr 20 und das Hüllrohr 33 aus Kunststoff gefertigt und stoffschlüssig miteinander verbunden, sei es durch miteinander einstückige Ausbildung oder nachträgliches stoffschlüssiges Verbinden.

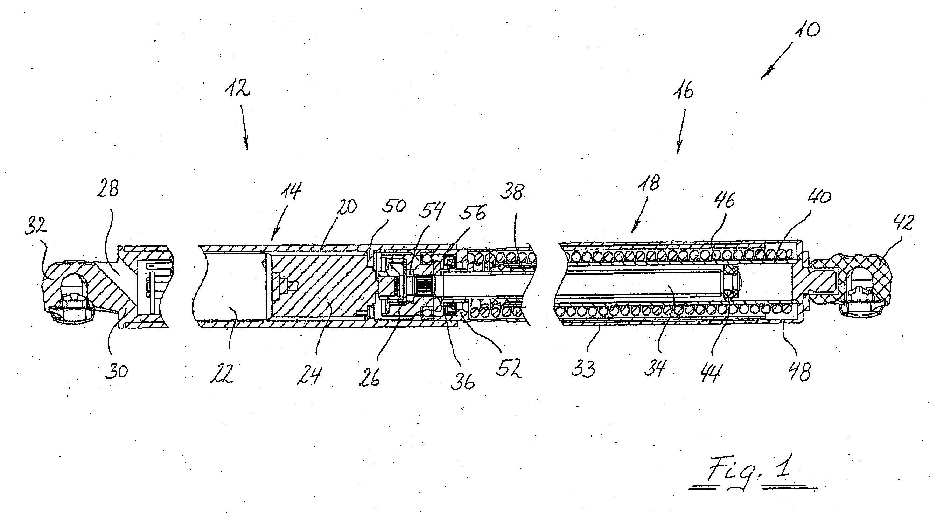

In dem ersten Ausführungsbeispiel gemäß Figur 1 ist der Vorsprung 50 an der Innenumfangsfläche des Gehäuserohrs 20 einstückig ausgebildet. Daher muss der Drehantrieb 14 in Figur 1 von links in das Gehäuserohr 20 eingeführt werden. Dies bedingt, dass das Bodenstück 30 von dem Gehäuserohr 20 getrennt ausgebildet ist und mit diesem im Zuge der Montage der Antriebseinrichtung 10 nachträglich stoffschlüssig verbunden wird. Der Drehantrieb 14 ist auf der dem Bodenstück 30 zugewandten Seite des Vorsprungs 50 angeordnet, während das erste Kupplungselement 26 auf der vom Bodenstück 30 abgewandten Seite des Vorsprungs 50 angeordnet ist.

Ferner sind bei dem ersten Ausführungsbeispiel das Gehäuserohr 20 und das Hüllrohr 33 voneinander getrennt ausgebildet und werden im Zuge der Montage der Antriebseinrichtung 10 nachträglich stoffschlüssig miteinander verbunden. Auch das Hüllrohr 33 weist einen radial inneren Vorsprung 52 auf, an dem sich die Schraubendruckfeder 46 abstützt. Das dem zweiten Kupplungselement 36 zugeordnete Ende der Gewindespindel 34 durchsetzt den vom Vorsprung 52 gebildeten Durchgang und trägt das zweite Kupplungselement 36, so dass das zweite Kupplungselement 36 im montierten Zustand der Antriebseinrichtung 10 zwischen den beiden Vorsprüngen 50 und 52 angeordnet ist.

Zum ersten Ausführungsbeispiel ist noch nachzutragen, dass die Öffnung 28 im Bodenstück 30 ausgebildet ist.

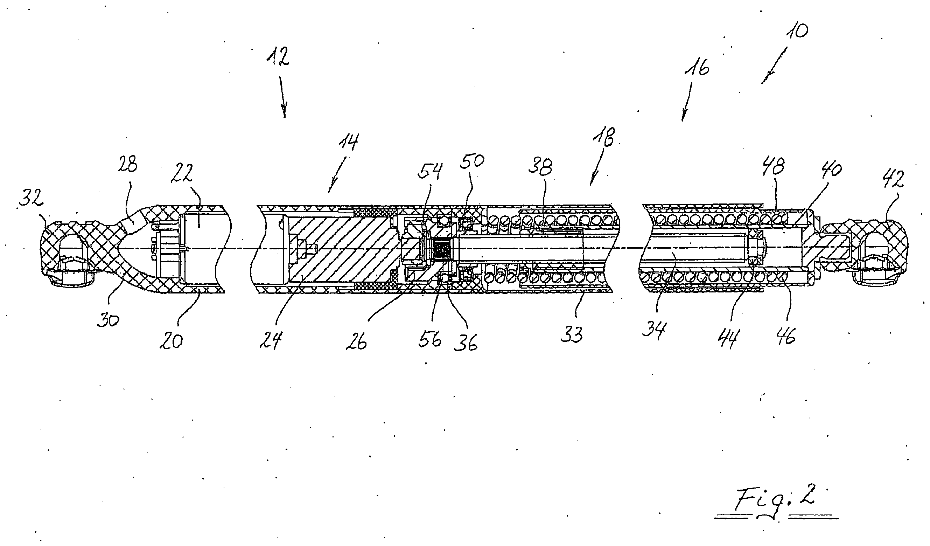

Bei der nicht erfindungsgemäßen Antriebseinrichtung gemäß Figur 2 ist das Bodenstück 30 mit dem Gehäuserohr 20 einstückig ausgebildet. Daher muss der Drehantrieb 14 in Figur 1 von rechts in das Gehäuserohr 20 eingeführt werden. Ferner sind das Gehäuserohr 20 und das Hüllrohr 33 voneinander getrennt ausgebildet und werden im Zuge der Montage der Antriebseinrichtung 10 nachträglich stoffschlüssig miteinander verbunden.

Der Vorsprung 50 ist an dem dem Gehäuserohr 20 zugewandten Ende des Hüllrohrs 33 ausgebildet. Das dem zweiten Kupplungselement 36 zugeordnete Ende der Gewindespindel 34 durchsetzt den vom Vorsprung 50 gebildeten Durchgang und trägt das zweite Kupplungselement 36.

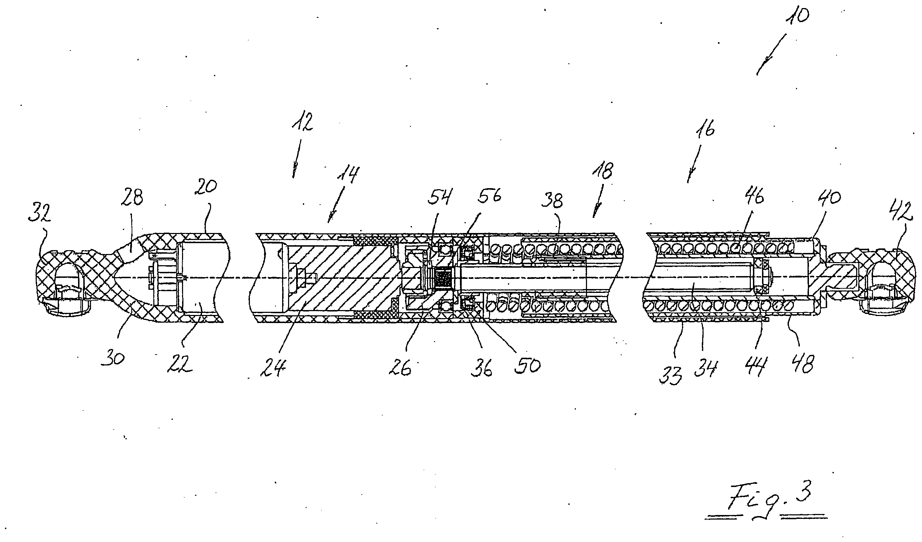

Bei der weiteren nicht erfindungsgemäßen Antriebseinrichtung gemäß Figur 3 sind das Gehäuserohr 20 und das Hüllrohr 33 miteinander einstückig ausgebildet, und ist ferner das Bodenstück 30 mit dem Gehäuserohr 20 einstückig ausgebildet. Daher müssen sowohl der Drehantrieb 14 als auch der Spindeltrieb 18 in Figur 3 von rechts in das Gehäuse-Hüll-Rohr 20/33 eingeführt werden. Dies bedingt ferner, dass der Vorsprung 50 von dem Gehäuse-Hüll-Rohr 20/33 getrennt ausgebildet ist und zwischen Drehantrieb 14 und Spindeltrieb 18 in das Gehäuse-Hüll-Rohr 20/33 eingeführt und an einer geeigneten Position mit diesem verbunden wird.

Wie in den Figuren 1 bis 3 grob schematisch angedeutet ist, kann bei allen drei Antriebseinrichtungen der Kupplungseingriff des ersten Kupplungselements 26 und des zweiten Kuplungselements 36 in axialer Richtung durch eine Schnappverbindung 54 und in Umfangsrichtung durch eine formschlüssige Verbindung 56 der beiden Kupplungselemente gebildet sein.

Ansonsten entspricht der Aufbau der Antriebseinrichtungen 10 aller drei Ausführungsformen jenem bekannter Antriebseinrichtungen. Stellvertretend sei hiermit auf die diesbezügliche Beschreibung der DE 10 2008 008 743 A1 verwiesen.

Nachzutragen ist noch, dass die Antriebseinrichtung vorteilhafterweise mit einer ersten oder/und einer zweiten Dichtung bereitgestellt sein kann, wobei die erste Dichtung zwischen dem Spindeltrieb und dem Gehäuserohr oder dem Hüllrohr angeordnet sein kann, um zu verhindern, dass Fremdsubstanzen, beispielsweise Wasser oder Staub, im Betrieb von der Spindeltriebseite her zwischen der Gewindespindel und dem Gehäuserohr hindurch in den Bereich des Drehantriebs eindringen. Die zweite Dichtung kann an der Außenseite des Hüllrohrs in dem Bereich, in welchem das Hüllrohr mit dem Gehäuserohr verbunden ist, bereitgestellt sein, um zu verhindern, dass Fremdsubstanzen zwischen das Hüllrohr und das Schutzrohr eindringen können, insbesondere in vollständig eingefahrenem Zustand der Antriebseinrichtung.

Ferner ist nachzutragen, dass zwischen dem Drehantrieb und dem ersten Kupplungselement eine elastische Dämpfung bereitgestellt sein kann, welche zur Verbesserung der Laufruhe und zum Abfangen von stoßartiger Belastung beim Anlaufen ein gewisses Spiel aufweist, allerdings keinen Schlupf erlaubt. Zusätzlich oder alternativ hierzu kann zwischen dem Drehantrieb und dem ersten Kupplungselement eine Überlastkupplung bereitgestellt sein, welche so gebildet ist, dass sie im Falle eines einen vorbestimmten Wert übersteigenden zu übertragenden Drehmoments den Drehantrieb und die Gewindespindel entkoppelt. Mittels der Überlastkupplung kann sichergestellt werden, dass auch in einem Fall, in welchem ein solches hohes Drehmoment anliegt, die Drehantriebsbaugruppe nicht beschädigt wird.

Zuletzt sei nachgetragen, dass zwischen der Gewindespindel und dem Gehäuserohr oder dem Hüllrohr eine Drehbremse bereitgestellt sein kann, welche dazu eingerichtet ist, eine vorbestimmte Bremskraft gegen eine Drehung der Gewindespindel in wenigstens einer Drehrichtung auszuüben. Hierdurch kann einerseits eine Hysterese in dem Spindelantrieb, und andererseits auch bei Drehung der Gewindespindel ein Bremsmoment erzeugt werden. Die so hervorgerufene erhöhte Anfahrtskraft kann durch geeignete Wahl der Bremsteile beispielsweise derart eingestellt sein, dass die Antriebseinrichtung auch in unbestromten Zustand bis zu einer vorgegebenen äußeren Kraft auf eines ihrer Enden in ihrer Ausfahrposition verbleibt.

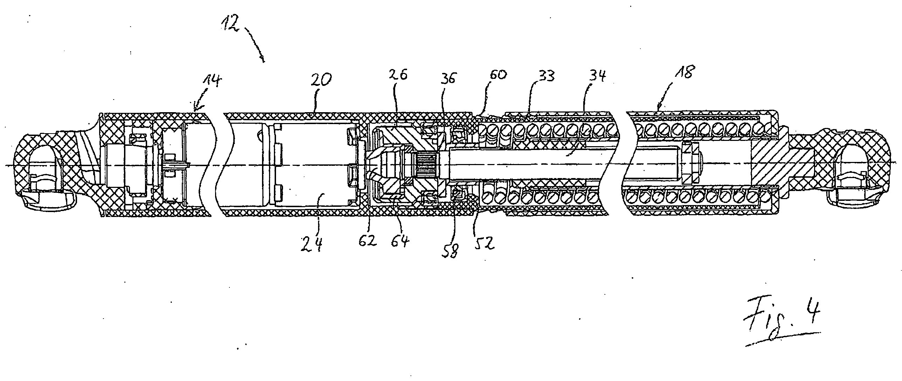

Im Folgenden werden ferner die Figuren 4 bis 8 beschrieben, welche weitere erfindungsgemäße Ausführungsbeispiele mit den nachgetragenen Merkmalen und Funktionen zeigen:
- Figur 4: zeigt einen Längsschnitt eines zweiten Ausführungsbeispiels,

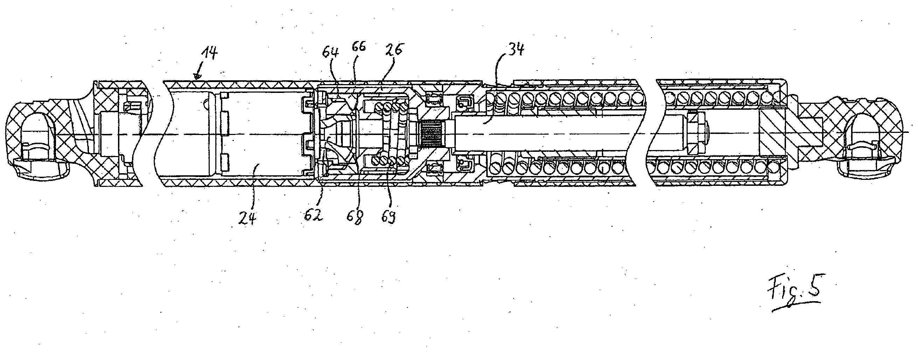

- Figur 5: zeigt einen Längsschnitt eines dritten Ausführungsbeispiels,

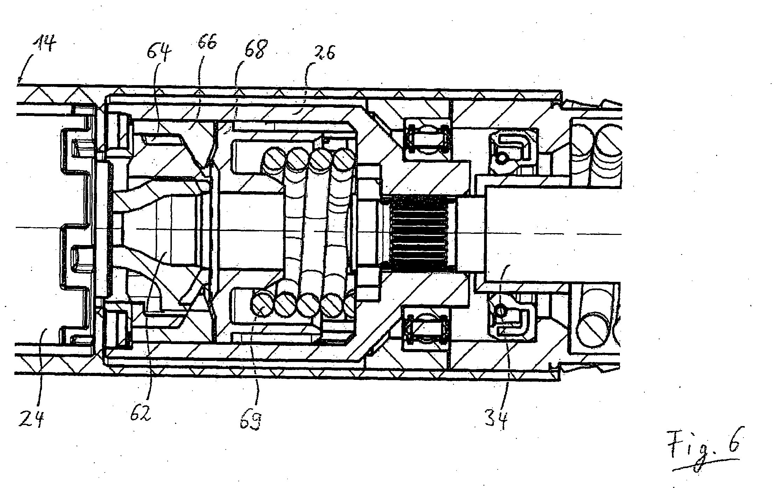

- Figur 6: zeigt eine Vergrößerung der Überlastkupplung aus dem drittten Ausführungsbeispiel,

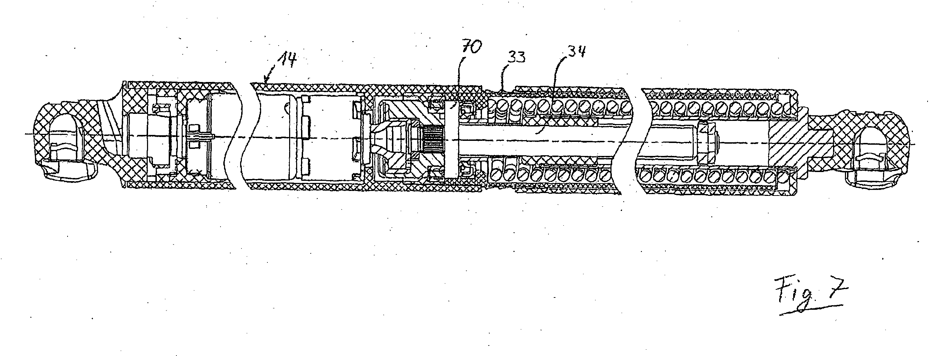

- Figur 7: zeigt einen Längsschnitt eines vierten Ausführungsbeispiels, und

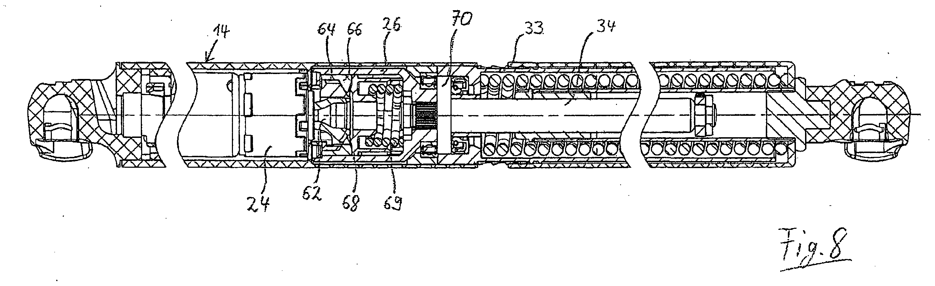

- Figur 8: zeigt einen Längsschnitt eines fünften Ausführungsbeispiels.

Das zweite Ausführungsbeispiel gemäß Figur 4 entspricht im Wesentlichen dem ersten Ausführungsbeispiel, jedoch ist eine Dichtung 60 vorgesehen.

Ferner ist eine erste Dichtung 58 gezeigt, die bereits in den Figuren 1 bis 3 dargestellt ist. Dort ist sie jedoch nicht mit einem Bezugszeichen versehen, und auf eine Beschreibung wurde zuvor verzichtet. Die erste Dichtung 58 befindet sich radial von der Mittelachse der Gewindespindel 34 aus gesehen außerhalb an die Gewindespindel 34 angrenzend, und axial im Wesentlichen in dem Bereich, in dem die Gewindespindel 34 aus dem Gehäuserohr 20 austritt. Insbesondere schließt sie in Figur 4 direkt auf der dem Drehantrieb 14 zugewandten Seite an den Vorsprung 52 an, und ist als Ringdichtung um die Gewindespindel 34 ausgeführt. Die erste Dichtung 58 ist der Drehantriebsbaugruppe 12 zugeordnet, so dass bei der Montage des zweiten Kupplungselements 36 dieses durch die erste Dichtung 58 hindurchtritt.

Durch die erste Dichtung 58 wird verhindert, dass Fremdsubstanzen, beispielsweise Wasser oder Staub, im Betrieb von der Spindeltriebseite her zwischen der Gewindespindel 34 und dem Gehäuserohr 20 hindurch in den Bereich des Drehantriebs 14 eindringen.

Eine zweite Dichtung 60 ist an der Außenseite des Hüllrohrs 33 auf der Seite des Spindeltriebs 18 anschließend an den Bereich angeordnet, in dem das Hüllrohr 33 mit dem Gehäuserohr 20 verbunden ist. Die Dichtung 60 besteht aus einer Mehrzahl von Lamellen, welche an das Hüllrohr 33 angeformt, oder auch als separates, fest mit dem Hüllrohr 33 verbundenes Element gebildet sein können. Im eingefahrenen Zustand des Spindeltriebs 18 sorgt die zweite Dichtung 60 dafür, dass keine Fremdsubstanzen zwischen das Hüllrohr 33 und das Schutzrohr 48 eindringen können.

Bereits in den Antriebseinrichtungen aus den Figuren 1 bis 4 ist eine elastische Dämpfung zwischen der Ausgangswelle des Untersetzungsgetriebes und dem ersten Kupplungselement dargestellt, auf eine Beschreibung davon wurde jedoch zuvor verzichtet. Dies soll nun anhand von des dritten Ausführungsbeispiels in den Figuren 5 und 6 nachgeholt werden. Die elastische Dämpfung trägt zur Verbesserung der Laufruhe und zum Abfangen von stoßartiger Belastung beim Anlaufen bei, indem sie ein gewisses Spiel aufweist, allerdings keinen Schlupf erlaubt.

Die elastische Dämpfung ist in dem ersten und zweiten Ausführungsbeispiel ausgeführt, indem die Verbindung zwischen der Ausgangswelle 62 des Untersetzungsgetriebes 24 mit dem ersten Kupplungselement 26 über ein elastisches Element 64 hergestellt ist.

Das dritte Ausführungsbeispiel gemäß Figur 5 entspricht im Wesentlichen dem zweiten Ausführungsbeispiel, umfasst jedoch zwischen der Ausgangswelle 62 des Untersetzungsgetriebes 24 und dem ersten Kupplungselement 26 zusätzlich eine Überlastkupplung, welche in Figur 6 noch einmal zur Verdeutlichung vergrößert dargestellt ist.

Hierzu ist das elastische Elements 64 nicht direkt mit ersten Kupplungselement 26, sondern mit einem Kupplungsring 66, welcher bezüglich des ersten Kupplungselements 26 drehbar ist, verbunden. Ein axial gleitbar aufgenommener, jedoch bezüglich des ersten Kupplungselement 26 drehfester Schieber 68 wird durch eine an dem ersten Kupplungselement 26 abgestützte Feder 69 mit einer vorbestimmten Kraft in Richtung des Kupplungsrings 66 vorbelastet. Es findet somit ein Reibschluss oder/und Formschluss zwischen dem Kupplungsring 66 und dem Schieber 68 statt, über welchen die Drehbewegung der Ausgangswelle 62 des Untersetzungsgetriebes 24 an das erste Kupplungselement 26 weitergegeben wird.

Liegt nun ein außergewöhnlich hohes Drehmoment an dem ersten Kupplungselement 26 oder der Ausgangswelle 62 des Untersetzungsgetriebes 24 an, beispielsweise aufgrund einer äußeren Kraft, die auf eine Seite der Antriebseinrichtung 10 wirkt, so tritt ein Schlupf zwischen dem Kupplungsring 66 und dem Schieber 68 auf. Somit wird im Fall eines auftretenden außergewöhnlich hohen Drehmoments die Drehantriebsbaugruppe 14 von der Gewindespindel 34 mittels der Überlastkupplung entkoppelt, und eine Beschädigung beispielsweise des Motors oder Getriebes wird somit verhindert.

In dem vierten Ausführungsbeispiel gemäß Figur 7 ist im Vergleich mit dem zweiten Ausführungsbeispiel zusätzlich eine Drehbremse 70 an dem dem Drehantrieb 14 zugewandten Endabschnitt der Gewindespindel 34 vorgesehen. Die Drehbremse 70 kann so aufgebaut sein, dass sie entweder in eine oder in beide möglichen Drehrichtungen der Gewindespindel 34 wirkt.

Hierzu ist ein Innenteil der Bremse 70 formschlüssig nach der Montage der Antriebseinrichtung mit der Gewindespindel 34 verbunden und rotiert mit dieser, während ein Außenteil formschlüssig mit dem Hüllrohr 33 verbunden ist. Die beiden Teile der Bremse 70 stehen in Reibkontakt, wodurch einerseits eine Hysterese in dem Spindelantrieb, und andererseits auch bei Drehung der Gewindespindel 34 ein Bremsmoment erzeugt wird. Die so erzeugte erhöhte Anfahrtskraft kann durch geeignete Wahl der ersten und zweiten Bremsteile beispielsweise derart eingestellt sein, dass die Antriebs-einrichtung 10 auch in unbestromten Zustand bis zu einer vorgegebenen äußeren Kraft auf eines ihrer Enden in ihrer Ausfahrposition verbleibt.

In dem in Figur 8 gezeigten sechsten Ausführungsbeispiel sind sowohl die Überlastkupplung aus dem dritten Ausführungsbeispiel, wie auch die Drehbremse aus dem vierten Ausführungsbeispiel vorgesehen.

## Patentansprüche

1. Baureihe von Antriebseinrichtungen, insbesondere für eine Klappe eines Fahrzeugs, umfassend:
• einen Drehantrieb (14),
• einen Spindeltrieb (18) mit einer Gewindespindel (34) und einer auf der Gewindespindel (34) angeordneten Gewindemutter (38),
wobei der Drehantrieb (14) mit der Gewindespindel (34) oder der Gewindemutter (38) über eine Kupplungseinheit mit einem ersten Drehantrieb-seitigen Kupplungselement (26) und einem zweiten Spindeltrieb-seitigen Kupplungselement (36) verbunden ist,
wobei die Gewindespindel (34) und die Gewindemutter (38) in Antwort auf eine Drehung des Drehantriebs (14) relativ zueinander axial verlagerbar sind,
wobei die Baureihe von Antriebseinrichtungen aus einer Drehantrieb-Baugruppe (12) und einer Spindeltrieb-Baugruppe (16) zusammengesetzt ist, wobei die Drehantrieb-Baugruppe (12) den Drehantrieb (14) und das erste Kupplungselement (26) umfasst und die Spindeltrieb-Baugruppe (16) den Spindeltrieb (18) und das zweite Kupplungselement (36) umfasst, und
dass die Drehantrieb-Baugruppe (12) und die Spindeltrieb-Baugruppe (16) einem Baukasten entnommen sind, der wenigstens zwei Drehantrieb-Baugruppen (12) und wenigstens zwei Spindeltrieb-Baugruppen (16) umfasst,
wobei die wenigstens zwei Drehantrieb-Baugruppen (12) des Baukastens identisch ausgebildete erste Kupplungselemente (26) aufweisen, sich hinsichtlich der Auslegung des Drehantriebs (14) jedoch in zumindest einem Auslegungsparameter, beispielsweise der Drehantriebsleistung, voneinander unterscheiden,
wobei die wenigstens zwei Spindeltrieb-Baugruppen (16) des Baukastens identisch ausgebildete zweite Kupplungselemente (36) aufweisen, sich hinsichtlich der Auslegung des Spindeltriebs (18) jedoch in zumindest einem Auslegungsparameter, beispielsweise der Hublänge, voneinander unterscheiden, und
wobei die ersten Kupplungselemente (26) der wenigstens zwei Drehantrieb-Baugruppen (12) und die zweiten Kupplungselemente (36) der wenigstens zwei Spindeltrieb-Baugruppen (16) zueinander passend ausgebildet sind, wobei der Drehantrieb (14) in einem Gehäuserohr (20) aufgenommen ist, das an seinem von dem Spindeltrieb (18) abgewandten Ende von einem Bodenstück (30) verschlossen ist, und dass das Bodenstück (30) und das Gehäuserohr (20) aus Kunststoff gefertigt sind, und das Bodenstück (30) mit dem Gehäuserohr (20) stoffschlüssig verbunden ist, wobei das Gehäuserohr (20) und das Bodenstück (30) voneinander getrennt ausgebildet und nachträglich miteinander stoffschlüssig verbunden sind, wobei ein nach radial innen abstehender Vorsprung (50) vorgesehen ist, wobei der Drehantrieb (14) in dem Gehäuserohr (20) zwischen dem Bodenstück (30) und dem Vorsprung (50) gehalten ist, und der Vorsprung (50) mit dem Gehäuserohr (20) einstückig ausgebildet ist.

2. Baureihe von Antriebseinrichtungen nach Anspruch 1,
**dadurch gekennzeichnet, dass** der Spindeltrieb (18) von einem Hüllrohr (33) umgeben ist.

3. Baureihe von Antriebseinrichtungen nach Anspruch 1,
**dadurch gekennzeichnet, dass** das Hüllrohr (33) mit dem Gehäuserohr (20) einstückig verbunden ist.

4. Baureihe von Antriebseinrichtungen nach Anspruch 2,
**dadurch gekennzeichnet, dass** das Hüllrohr (33) und das Gehäuserohr (20) voneinander getrennt ausgebildet und nachträglich miteinander stoffschlüssig verbunden sind, beispielsweise durch Schweißen, insbesondere durch Laserschweißen.

5. Baureihe von Antriebseinrichtungen nach Anspruch 1,
**dadurch gekennzeichnet, dass** das erste Kupplungselement (26) dem Vorsprung (50) auf dessen dem Drehantrieb (14) zugewandter Seite benachbart angeordnet ist und das zweite Kupplungselement (36) oder das es tragende Ende der Gewindespindel (34) einen von dem Vorsprung (50) belassenen Axialdurchgang durchsetzt, um mit dem ersten Kupplungselement (26) in Kupplungseingriff zu treten.

6. Baureihe von Antriebseinrichtungen nach Anspruch 5,
**dadurch gekennzeichnet, dass** der Kupplungseingriff des ersten Kupplungselements (26) und des zweiten Kuplungselements (36) in axialer Richtung durch eine Schnappverbindung (54) und in Umfangsrichtung durch eine formschlüssige Verbindung der beiden Kupplungselemente (26, 36) gebildet ist.

7. Baureihe von Antriebseinrichtungen nach einem der Ansprüche 1 bis 6,
**dadurch gekennzeichnet, dass** zwischen dem Spindeltrieb (18) und dem Gehäuserohr (20) oder dem Hüllrohr (33) eine Dichtung (58) vorgesehen ist.

8. Baureihe von Antriebseinrichtungen nach einem der Ansprüche 2 bis 7,
**dadurch gekennzeichnet, dass** die Spindeltriebbaugruppe (16) ferner mit einem Schutzrohr (48) bereitgestellt ist, welches das Hüllrohr (33) umgibt, wobei an der Außenseite des Hüllrohrs (33) in dem Bereich, in welchem das Hüllrohr (33) mit dem Gehäuserohr (20) verbunden ist, eine Dichtung (60) zwischen dem Hüllrohr (33) und dem Schutzrohr (48) vorgesehen ist.

9. Baureihe von Antriebseinrichtungen nach einem der vorhergehenden Ansprüche,
**dadurch gekennzeichnet, dass** zwischen dem Drehantrieb (14) und dem ersten Kupplungselement (26) eine elastische Dämpfung (64) bereitgestellt ist.

10. Baureihe von Antriebseinrichtungen nach einem der vorhergehenden Ansprüche,
**dadurch gekennzeichnet, dass** zwischen dem Drehantrieb (14) und dem ersten Kupplungselement (26) eine Überlastkupplung bereitgestellt ist, welche dazu eingerichtet ist, im Falle eines einen vorbestimmten Wert übersteigenden zu übertragenden Drehmoments, den Drehantrieb (14) und die Gewindespindel (34) zu entkoppeln.

11. Baureihe von Antriebseinrichtungen nach einem der vorhergehenden Ansprüche,
**dadurch gekennzeichnet, dass** zwischen der Gewindespindel (34) und dem Gehäuserohr (20) oder dem Hüllrohr (33) eine Drehbremse (70) bereitgestellt ist, welche dazu eingerichtet ist, eine vorbestimmte Bremskraft gegen eine Drehung der Gewindespindel (34) in wenigstens einer Drehrichtung auszuüben.

## Claims

1. Series of driving devices, in particular for a flap of a vehicle, comprising:
- a rotary drive (14),
- a spindle drive (18) having a threaded spindle (34) and a threaded nut (38) arranged on the threaded spindle (34),
wherein the rotary drive (14) is connected to the threaded spindle (34) or to the threaded nut (38) via a coupling unit comprising a first coupling element (26) on the rotary drive side and a second coupling element (36) on the spindle drive side,
wherein the threaded spindle (34) and the threaded nut (38) are axially movable relative to one another in reaction to a rotation of the rotary drive (14),
wherein the series of driving devices is made up of a rotary drive assembly (12) and a spindle drive assembly (16), wherein the rotary drive assembly (12) comprises the rotary drive (14) and the first coupling element (26), and the spindle drive assembly (16) comprises the spindle drive (18) and the second coupling element (36), and
in that the rotary drive assembly (12) and the spindle drive assembly (16) are removed from a modular system which comprises at least two rotary drive assemblies (12) and at least two spindle drive assemblies (16),
wherein the at least two rotary drive assemblies (12) of the modular system have identically formed first coupling elements (26), but, with regard to the configuration of the rotary drive (14), differ from one another in at least one configuration parameter, for example the rotary drive power,
wherein the at least two spindle drive assemblies (16) of the modular system have identically formed second coupling elements (36), but, with regard to the configuration of the spindle drive (18), differ from one another in at least one configuration parameter, for example the stroke length, and
wherein the first coupling elements (26) of the at least two rotary drive assemblies (12) and the second coupling elements (36) of the at least two spindle drive assemblies (16) are designed to complement one another, wherein the rotary drive (14) is received in a housing tube (20) which is closed, at its end facing away from the spindle drive (18), by a base piece (30), and in that the base piece (30) and the housing tube (20) are manufactured from plastics material, and the base piece (30) is integrally bonded to the housing tube (20), wherein the housing tube (20) and the base piece (30) are formed separately from one another and are integrally bonded to one another at a later stage, wherein a radially inwardly protruding projection (50) is provided, wherein the rotary drive (14) is held in the housing tube (20) between the base piece (30) and the projection (50), and the projection (50) is integral with the housing tube (20).

2. Series of driving devices according to claim 1, **characterised in that** the spindle drive (18) is surrounded by a casing tube (33).

3. Series of driving devices according to claim 1, **characterised in that** the casing tube (33) is integrally connected to the housing tube (20).

4. Series of driving devices according to claim 2, **characterised in that** the casing tube (33) and the housing tube (20) are formed separately from one another and are integrally bonded to one another at a later stage, for example by welding, in particular by laser welding.

5. Series of driving devices according to claim 1, **characterised in that** the first coupling element (26) is arranged adjacently to the projection (50) on the side thereof facing the rotary drive (14), and the second coupling element (36) or the end of the threaded spindle (34) supporting said coupling element passes through an axial passage left by the projection (50), in order to enter into coupling engagement with the first coupling element (26).

6. Series of driving devices according to claim 5, **characterised in that** the coupling engagement of the first coupling element (26) and of the second coupling element (36) is formed in the axial direction by a snap connection (54) and in the circumferential direction by an interlocking connection of the two coupling elements (26, 36).

7. Series of driving devices according to any of claims 1 to 6, **characterised in that** a seal (58) is provided between the spindle drive (18) and the housing tube (20) or the casing tube (33).

8. Series of driving devices according to any of claims 2 to 7, **characterised in that** the spindle drive assembly (16) is also provided with a protective tube (48) which surrounds the casing tube (33), a seal (60) being provided between the casing tube (33) and the protective tube (48) on the outside of the casing tube (33) in the region in which the casing tube (33) is connected to the housing tube (20).

9. Series of driving devices according to any of the preceding claims, **characterised in that** a resilient damper (64) is provided between the rotary drive (14) and the first coupling element (26).

10. Series of driving devices according to any of the preceding claims, **characterised in that** an overload coupling is provided between the rotary drive (14) and the first coupling element (26), and is designed to decouple the rotary drive (14) and the threaded spindle (34) in the event that a torque to be transmitted exceeds a predetermined value.

11. Series of driving devices according to any of the preceding claims, **characterised in that** between the threaded spindle (34) and the housing tube (20) or the casing tube (33), a rotary brake (70) is provided which is designed to exert a predetermined braking force against a rotation of the threaded spindle (34) in at least one direction of rotation.

## Revendications

1. Gamme de fabrication de dispositifs d'entraînement, en particulier pour un clapet d'un véhicule, comprenant:
• un entraînement rotatif (14),
• une commande à broche (18), avec une broche filetée (34) et un écrou fileté (38) monté sur la broche filetée (34),
dans laquelle l'entraînement rotatif (14) est relié à la broche filetée (34) ou à l'écrou fileté (38) au moyen d'une unité de couplage comprenant un premier élément de couplage côté entraînement rotatif (26) et un deuxième élément de couplage côté commande à broche (36),
dans laquelle la broche filetée (34) et l'écrou fileté (38) peuvent se déplacer axialement l'un par rapport à l'autre en réponse à une rotation de l'entraînement rotatif (14),
dans laquelle la gamme de fabrication de dispositifs d'entraînement est composée d'un module d'entraînement rotatif (12) et d'un module de broche de commande (16), dans laquelle le module d'entraînement rotatif (12) comprend l'entraînement rotatif (14) et le premier élément de couplage (26) et le module de broche de commande (16) comprend la commande à broche (18) et le deuxième élément de couplage (36), et
dans laquelle le module d'entraînement rotatif (12) et le module de commande à broche (16) sont prélevés dans une boîte de construction, qui comprend au moins deux modules d'entraînement rotatif (12) et au moins deux modules de commande à broche (16),
dans laquelle lesdits au moins deux modules d'entraînement rotatif (12) de la boîte de construction présentent des premiers éléments de couplage identiques (26), mais se différencient cependant l'un de l'autre en ce qui concerne la conception de l'entraînement rotatif (14) par au moins un paramètre de conception, par exemple la puissance de l'entraînement rotatif,
dans laquelle lesdits au moins deux modules de commande à broche (16) de la boîte de construction présentent des deuxièmes éléments de couplage identiques (36), mais se différencient cependant l'un de l'autre en ce qui concerne la conception de la commande à broche (18) par au moins un paramètre de conception, par exemple la longueur de la course, et
dans laquelle les premiers éléments de couplage (26) desdits au moins deux modules d'entraînement rotatif (12) et les deuxièmes éléments de couplage (36) desdits au moins deux modules de commande à broche (16) sont réalisés de façon ajustée l'un à l'autre, dans laquelle l'entraînement rotatif (14) est logé dans un tube de boîtier (20), qui est fermé par une pièce de fond (30) à son extrémité située à l'opposé de la commande à broche (18), et en ce que la pièce de fond (30) et le tube de boîtier (20) sont fabriqués en matière synthétique, et la pièce de fond (30) est assemblée en continuité de matière avec le tube de boîtier (20), dans laquelle le tube de boîtier (20) et la pièce de fond (30) sont réalisés séparément l'un de l'autre et sont ensuite assemblés l'un à l'autre en continuité de matière, dans laquelle il est prévu une protubérance (50) saillante radialement vers l'intérieur, dans laquelle l'entraînement rotatif (14) est maintenu dans le tube de boîtier (20) entre la pièce de fond (30) et la protubérance (50), et la protubérance (50) le long du pourtour intérieur du tube de boitier (20) est réalisée en une seule pièce avec le tube de boîtier (20) .

2. Gamme de fabrication de dispositifs d'entraînement selon la revendication 1, **caractérisée en ce que** la commande à broche (18) est entourée d'un tube d'enveloppe (33).

3. Gamme de fabrication de dispositifs d'entraînement selon la revendication 1, **caractérisée en ce que** le tube d'enveloppe (33) est assemblé en une seule pièce au tube de boîtier (20).

4. Gamme de fabrication de dispositifs d'entraînement selon la revendication 2, **caractérisée en ce que** le tube d'enveloppe (33) et le tube de boîtier (20) sont réalisés séparément l'un de l'autre et sont ensuite assemblés l'un à l'autre en continuité de matière, par exemple par soudage, en particulier par soudage au laser.

5. Gamme de fabrication de dispositifs d'entraînement selon la revendication 1, **caractérisée en ce que** le premier élément de couplage (26) est disposé à proximité de la protubérance (50) sur le côté de celle-ci tourné vers l'entraînement rotatif (14) et le deuxième élément de couplage (36) ou l'extrémité de la broche filetée (34) qui le porte traverse un passage axial laissé par la protubérance (50), afin de venir en engagement de couplage avec le premier élément de couplage (26).

6. Gamme de fabrication de dispositifs d'entraînement selon la revendication 5, **caractérisée en ce que** l'engagement de couplage du premier élément de couplage (26) et du deuxième élément de couplage (36) est formé en direction axiale par un assemblage à déclic (54) et en direction périphérique par un assemblage par emboîtement des deux éléments de couplage (26, 36).

7. Gamme de fabrication de dispositifs d'entraînement selon l'une quelconque des revendications 1 à 6, **caractérisée en ce qu'**il est prévu un joint d'étanchéité (58) entre la commande à broche (18) et le tube de boîtier (20) ou le tube d'enveloppe (33).

8. Gamme de fabrication de dispositifs d'entraînement selon l'une quelconque des revendications 2 à 7, **caractérisée en ce que** le module de commande à broche (16) est en outre réalisé avec un tube de protection (48), qui entoure le tube d'enveloppe (33), dans laquelle il est prévu sur le côté extérieur du tube d'enveloppe (33), dans la région où le tube d'enveloppe (33) est relié au tube de boîtier (20), un joint d'étanchéité (60) entre le tube d'enveloppe (33) et le tube de protection (48).

9. Gamme de fabrication de dispositifs d'entraînement selon l'une quelconque des revendications précédentes, **caractérisée en ce qu'**un amortissement élastique (64) est réalisé entre l'entraînement rotatif (14) et le premier élément de couplage (26).

10. Gamme de fabrication de dispositifs d'entraînement selon l'une quelconque des revendications précédentes, **caractérisée en ce qu'**un limiteur de couple est installé entre l'entraînement rotatif (14) et le premier élément de couplage (26), qui est conçu pour découpler l'entraînement rotatif (14) et la broche filetée (34) dans le cas d'un couple de rotation à transmettre qui dépasse une valeur prédéterminée.

11. Gamme de fabrication de dispositifs d'entraînement selon l'une quelconque des revendications précédentes, **caractérisée en ce qu'**un frein de rotation (70) est installé entre la broche filetée (34) et le tube de boîtier (20) ou le tube d'enveloppe (33), qui est conçu pour exercer une force de freinage prédéterminée contre une rotation de la broche filetée (34) dans au moins un sens de rotation.
